Europäisches Patentamt

European Patent Office

Office européen des brevets

(19)

(11) Numéro de publication : **0 358 834 B1**

(12) **FASCICULE DE BREVET EUROPEEN**

(45) Date de publication du fascicule du brevet :
03.06.92 Bulletin 92/23

(51) Int. Cl.⁵ : **F16K 27/02, F16K 31/42**

(21) Numéro de dépôt : 88810627.5

(22) Date de dépôt : **14.09.88**

(54) **Valve pour fluide.**

(43) Date de publication de la demande :
**21.03.90 Bulletin 90/12**

(45) Mention de la délivrance du brevet :
**03.06.92 Bulletin 92/23**

(84) Etats contractants désignés :
**AT CH DE ES FR GB GR IT LI NL SE**

(56) Documents cités :
**EP-A- 0 089 788
EP-A- 0 205 655
AT-A- 378 832
CH-A- 561 384
FR-A- 2 468 048**

(73) Titulaire : **HONEYWELL LUCIFER SA
16, chemin du Faubourg-de-Cruseilles
CH-1227 Carouge (Genève) (CH)**

(72) Inventeur : **Prina, Raphael
289b, route de Saint-Julien
CH-1258 Perly (CH)**

(74) Mandataire : **Ardin, Pierre et al
PIERRE ARDIN & CIE 22, rue du Mont-Blanc
Case postale 60
CH-1211 Genève 1 (CH)**

## Description

L'invention se rapporte à une valve pour fluide, comprenant un corps, au moins un passage d'entrée du fluide et un passage de sortie du fluide, un obturateur entre les passages d'entrée et de sortie et une enveloppe entourant le corps, cette enveloppe présentant des ouvertures situées en regard desdits passages et portant des raccords sur lesdites ouvertures.

Par le CH-A- 561.384 on connaît déjà une valve de ce type.

Le but de la présente invention est de réaliser une valve d'une excellent fiabilité mécanique et d'une fabrication facile et peu coûteuse. A cet effet, la valve selon l'invention est caractérisée en ce que l'enveloppe est de forme tubulaire obtenue à partir d'un profilé extrudé, au moins un des raccords présentant un embout destiné à s'engager en ménageant un jeu radial avec un desdits passages du corps, ce jeu étant comblé par un joint annulaire permettant un déplacement axial entre ledit raccord et le corps.

La valve selon l'invention présente l'avantage additionnel de permettre la réalisation de son corps dans d'autres matières que le métal. Par exemple, il est particulièrement avantageux de fabriquer le corps de la valve en matière synthétique par injection, ce qui réduit le coût de production et le poids de la valve.

D'autres avantages et particularités de l'invention ressortiront plus clairement de la description suivante, en référence au dessin annexé, présenté schématiquement et à titre d'exemple non-limitatif.

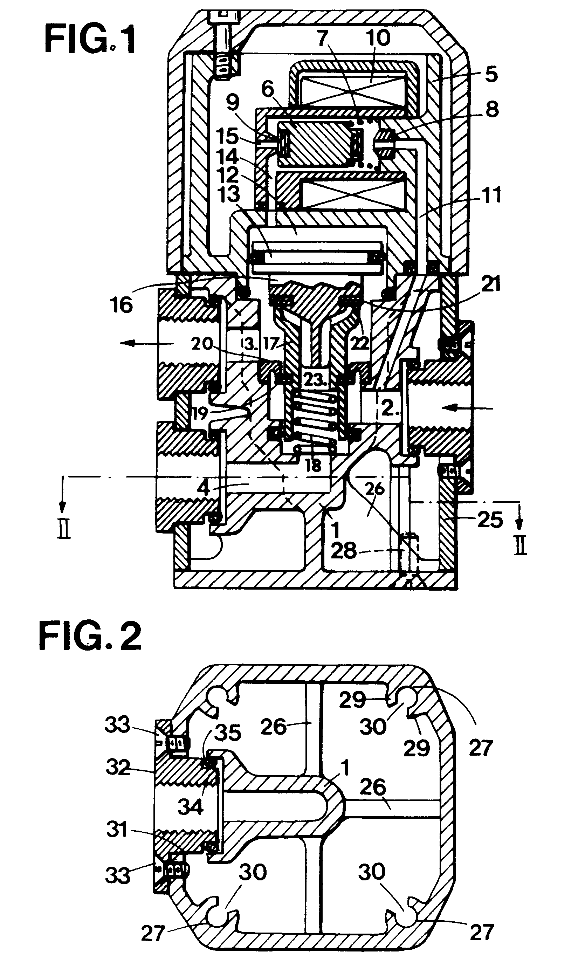

La figure 1 est une vue en coupe de la valve selon l'invention.

La figure 2 est une coupe selon la ligne II - II de la figure 1.

La valve à trois voies et à servocommande représentée au dessin comprend un corps 1 présentant un passage 2 pour l'admission du fluide sous pression, un passage 3 pour alimenter un utilisateur non représenté et un passage 4 pour la mise à l'échappement.

Le dispositif de commande de la valve est monté sur un support 5 fixé au corps 1 et comprend un noyau magnétique mobile 6 soumis à l'action d'un ressort 7 et coopérant avec deux sièges 8 et 9. Le noyau 6 est soumis au champ magnétique produit par un enroulement 10 qui le déplace contre l'action du ressort 7 pour obturer le siège 8. Ce dernier est alimenté en fluide sous pression grâce à un conduit 11 débouchant dans le passage 2. Le fluide sous pression, en principe de l'air comprimé, pénètre dans une chambre 12 pour agir sur un piston 13, grâce à un passage 14. Lorsque le noyau 6 est en position attirée, la chambre 12 est mise à l'échappement par un passage 15 du siège 9.

Le piston 13 fait partie d'un obturateur en deux pièces 16 et 17 qui est représenté dans sa position intermédiaire pour laquelle aucune communication n'existe entre les passages 2, 3 et 4. Toutefois, il est clair que l'air sous pression passant par le conduit 11 va pousser le piston 13 vers le bas contre l'action d'un ressort 18 et établir la communication entre les passages 2 et 3 par éloignement d'un clapet annulaire 19 d'un siège 20.

Pour la mise à l'échappement, le noyau 6 est attiré en position d'obturation du siège 8, ce qui met la chambre 12 à l'échappement par le passage 15 et permet le déplacement du piston 13 vers le haut grâce à la pression régnant dans l'utilisateur, pression qui se transmet par le passage 3 sous la face inférieure du piston 13. La pièce 16 de l'obturateur s'éloigne alors de la pièce 17, ce qui soulève un clapet annulaire 21 de son siège 22 mettant ainsi en communication les passages 3 et 4 grâce au perçage axial 23 de la pièce 17.

Le corps 1 de la valve est entouré de ses quatre côtés par une enveloppe 25 de forme tubulaire, obtenue à partir d'un profilé extrudé par exemple en métal.

Cette enveloppe (ou profilé) 25 est centrée sur des nervures 26 du corps 1 et présente quatre rainures 27 destinées à recevoir des vis de fixation 28 de l'enveloppe 25 au corps 1. Les rainures 27, de section circulaire, s'étendent selon l'axe longitudinal du profilé 25, sur toute la longueur de celui-ci, et sont définies par deux lèvres 29 séparées par une fente longitudinale 30 et situées sur la paroi interne dudit profilé.

L'enveloppe 25 présente des ouvertures 31 sur lesquelles sont disposés des raccords 32 constitués par des douilles filetées rapportées, montées depuis l'extérieur de l'enveloppe et rendues solidaires de celle-ci par des vis 33. Ces raccords 32 présentent un embout 34 destiné à s'engager avec jeu radial dans un desdits passages 2, 3 et 4 du corps 1, ce jeu radial étant comblé par un joint annulaire 35 permettant un déplacement axial entre lesdits raccords et le corps 1. Cette construction est particulièrement appropriée, car ce déplacement axial entre les raccords et le corps 1 permet de conserver l'étanchéité malgré les différences de dilatation thermique qui existent en général entre le corps 1 qui est avantageusement en résine synthétique moulée et l'enveloppe 25 métallique.

La construction décrite est intéressante car elle permet de maintenir en stock des valves dépourvues des raccords 32 et de monter ceux-ci lors de la livraison au client en tenant compte de ses désirs pour les dimensions du filetage desdits raccords.

On peut bien entendu prévoir de nombreuses variantes d'exécution et il est clair que le principe d'un corps de valve moulé dont la solidité est assurée par un profilé extrudé formant enveloppe peut être utilisé pratiquement dans tous les types connus de valves à deux voies ou davantage munies ou non d'une servocommande. De même, la réalisation des joints entre le corps et les douilles peut être effectuée différem-

3 EP 0 358 834 B1 4

ment et l'on pourrait très bien concevoir que le corps présente des embouts pénétrant dans un alésage des douilles de raccords. On pourrait aussi placer des joints entre deux surfaces planes de la douille et du corps, ce joint devant alors pouvoir être élastiquement déformé dans le sens axial de la liaison raccord-corps.

## Revendications

1. Valve pour fluide, comprenant un corps (1), au moins un passage (2) d'entrée du fluide et un passage (3) de sortie du fluide, un obturateur (16, 17) entre les passages d'entrée (2) et de sortie (3) et une enveloppe (25) entourant le corps (1), cette enveloppe présentant des ouvertures (31) situées en regard desdits passages et portant des raccords (32) sur lesdites ouvertures (31), **caractérisée** en ce que l'enveloppe (25) est de forme tubulaire obtenue à partir d'un profilé extrudé, au moins un des raccords (32) présentant un embout (34) destiné à s'engager en ménageant un jeu radical avec un desdits passages (2, 3) du corps (1), ce jeu étant comblé par un joint annulaire (35) permettant un déplacement axial entre ledit raccord (32) et le corps (1).

2. Valve selon la revendication 1, **caractérisée** en ce que les raccords (32) sont constitués par des douilles rapportées, montées depuis l'extérieur de l'enveloppe (25) et rendues solidaires de cette dernière.

3. Valve selon la revendication 1, **caractérisée** en ce que l'enveloppe (25) présente au moins deux rainures (27) s'étendant selon l'axe longitudinal de profilé et sur toute la longueur de celui-ci, ces rainures (27) ayant une section circulaire et étant destinées à recevoir des vis (28) de fixation de l'enveloppe (25).

4. Valve selon la revendication 3, **caractérisée** en ce que lesdites rainures (27) sont définies par deux lèvres (29) séparées par une fente longitudinale (30) et situées sur la paroi interne du profilé.

## Patentansprüche

1. Ventil für Fluid, umfassend einen Körper (1), mindestens einen Eintrittsdurchlaß (2) für das Fluid und einen Austrittsdurchlaß (3) für das Fluid, einen Verschluß (16,17) zwischen dem Eintrittsdurchlaß (2) und dem Austrittsdurchlaß (3) und ein Gehäuse (25), das den Körper (1) umgibt, wobei dieses Gehäuse gegenüber den Durchlässen angeordnete Öffnungen (31) aufweist und wobei es auf den Öffnungen (31) Anschlüsse (32) trägt, dadurch gekennzeichnet, daß das Gehäuse (25) die Form eines von einem stranggepreßten Profil ausgehend erhaltenen Rohres hat, wobei mindestens einer der Anschlüsse (32) ein Ansatzstück (34) aufweist, das dazu vorgesehen ist, mit einem radialen Spiel in einen der Durchlässe (2, 3) des Körpers (1) einzugreifen, wobei dieses Spiel durch eine ringförmige Dichtung (35) ausgeglichen wird, die eine axiale Versetzung zwischen dem Anschluß (32) und dem Körper (1) ermöglicht.

2. Ventil nach Anspruch 1, dadurch gekennzeichnet, daß die Anschlüsse (32) durch aufgesetzte Hülsen gebildet werden, die von der Außenseite des Gehäuses (25) her angebracht und mit letzterem fest verbunden sind.

3. Ventil nach Anspruch 1, dadurch gekennzeichnet, daß das Gehäuse (25) mindestens zwei Rillen (27) aufweist, die sich längs der Längsachse des Profils und entlang der gesamten Länge desselben erstrecken, wobei die Rillen (27) einen runden Querschnitt aufweisen und dazu vorgesehen sind, Befestigungsschrauben (28) für das Gehäuse aufzunehmen.

4. Ventil nach Anspruch 3, dadurch gekennzeichnet, daß die Rillen (27) durch zwei Lippen (29) gebildet sind, die durch einen Langsschlitz (30) voneinander getrennt und auf der Innenwand des Profils angeordnet sind.

## Claims

1. Valve for fluid, comprising a body (1), at least one inlet passage (2) and one outlet passage (3) for the fluid, a shutter (16, 17) between the inlet (2) and outlet (3) passages and a jacket (25) surrounding the body (1), this jacket having openings (31) situated opposite said passages and bearing connections (32) on said openings (31), characterised in that the jacket (25) is of tubular shape obtained from an extruded profile, at least one of the connections (32) having an end (34) intended to engage in, bringing about a radial clearance with, one of said passages (2, 3) of the body (1), this clearance being filled by an annular gasket (35) which allows axial displacement between said connection (32) and the body (1).

2. Valve according to Claim 1, characterised in that the connections (32) are constituted by added bushes, mounted from the outside of the jacket (25) and rendered integral with the latter.

3. Valve according to Claim 1, characterised in that the jacket (25) has at least two grooves (27) extending according to the longitudinal axis of the profile and over the entire length of the latter, these grooves (27) having a circular cross-section and being intended to receive screws (28) for fixing the jacket (25).

4. Valve according to Claim 3, characterised in that said grooves (27) are defined by two lips (29) which are separated by a longitudinal slot (30) and situated on the internal wall of the profile.

# FIG.1

# FIG. 2